# FASCICULE DE BREVET EUROPEEN

(11) **EP 0 550 349 B1**
(45) Date de publication et mention de la délivrance du brevet: **29.09.1999**
(21) Numéro de dépôt: 92420447.2
(22) Date de dépôt: 03.12.1992
(51) Int. Cl.: H01B 1/12, C08G 61/12, C08K 9/12

(54) **Compositions électroconductrices de polymères contenant des composés amphiphiles polymérisables dérivés du pyrrole, leur obtention et leur utilisation**
Elektrisch leitfähige Polymerzusammensetzungen enthaltend amphiphile, polymerisierbare Pyrrolderivate, ihre Herstellung und Verwendung
Electroconductible polymer compositions containing amphiphilic polymerisable pyrrole derivatives, their preparation and use

(30) Priorité: 18.12.1991 FR 9116197
(43) Date de publication de la demande: 07.07.1993
(73) Titulaire: TORAY PLASTICS EUROPE SA, 01701 Saint-Maurice de-Beynost (FR)
(72) Inventeur: Pecate, Nicole, F-78360 Montesson (FR); Richard, Joel, Résidence Mermoz, F-60500 Chantilly (FR)
(74) Mandataire: Kügele, Bernhard

(56) Documents cités:
- EP-A- 0 253 595
- EP-A- 0 332 704
- EP-A- 0 348 795
- US-A- 4 604 427
- DATABASE STN FILE CA, CHEMICAL ABSTRACTS, vol. 113, no. 14, abstract no. 116755f; & JP - A - 02067329 (NIPPON SODA CO LTD) 07.03.1990 en combinaison avec Database STN, file Reg, Reg No. 115833-22-2
- DATABASE STN FILE CA, CHEMICAL ABSTRACTS, vol. 112, no. 2, 1988, abstract no. 7980j, Koenshu - Kyoto Daigaku Nippon Kagaku Sen'i Kenkyusho, 45, pages 43-48; T. SHIMIDZU et al.: "Synthesis and properties of anisotropic-conductive polymer thin films" en combinaison avec Database STN, File Reg No. 115833-22-2
- SYNTHETIC METALS, vol. 15, nos. 2,3, juillet/août 1986, pages 175-182; S.J. JASNE et al.: "Electrochemical Polymerisation of Pyrrole in the Presence of Latexes"

## Description

La présente invention a pour objet des compositions de polymères contenant des composés amphiphiles polymérisables en polymères conducteurs, et en particulier des particules de polymères comportant, implantées à leur surface, des molécules desdits composés amphiphiles, leur procédé d'obtention et leur utilisation pour la fabrication de films conducteurs.

On sait obtenir des polymères conducteurs constitués de chaînes de doubles liaisons conjuguées, par polymérisation anodique en présence de sels conducteurs ou par polymérisation chimique sous l'action d'oxydants, de composés hétérocycliques comportant deux doubles liaisons conjuguées tels que le pyrrole, le thiophène ou le furanne et leurs dérivés de substitution. En dépit de leur intérêt, le développement industriel de ces polymères a été freiné par différents inconvénients tels qu'une relative instabilité chimique, de faibles propriétés mécaniques et surtout des difficultés de mise en oeuvre inhérentes à leur faible solubilité. Même les polymères les plus stables, comme les polypyrroles, trouvent difficilement des applications. Diverses solutions ont été proposées au problème de la mise en oeuvre de ce type de polymères conducteurs. Ainsi, on a proposé (cf. R. YOSOMIYA et al Makromol. Chem. Rapid. Comm. 7 (1986) 697-701) de préparer des films électro-conducteurs composites en mettant en contact des vapeurs de pyrrole avec un film préformé d'un polymère filmogène (alcool polyvinylique ; polychlorure de vinyle ; polyméthacrylate de méthyle) contenant un agent oxydant (par exemple CuCl₂). On a encore proposé dans la demande de brevet européen publiée sous le n° 0.206.414 et dans le brevet américain n° 4.521.450 de polymériser le pyrrole par voie chimique en phase liquide au sein d'un solide poreux ou absorbant tels que le papier ou les matériaux cellulosiques, des fibres naturelles ou synthétiques, des films minces de matériaux plastiques (polyéthylène, polypropylène par exemple). Enfin, on a proposé de procéder à la polymérisation anodique ou chimique de monomères à doubles liaisons conjuguées, notamment du pyrrole et de ses dérivés de susbstitution, en présence de particules de polymères transformables comportant des groupes fonctionnels ioniques, jouant le rôle de dopant du polymère non chargé en fournissant le contre-ion nécessaire à équilibrer les charges électriques du polymère conducteur, cf. demande de brevet anglais publiée sous le n° 2.124.635 ; brevet américain n° 4.552.927 ; demandes de brevets européens n° 0.160.207 et 0.229.992 ; demande de brevet français publiée sous le n° 2.616.790 ; S.J. JASNE et al Synthetic Metals 15 (1986) 175-182 ; dans ce type de procédé, le polymère dopant est généralement dispersé dans le milieu de polymérisation et, plus particulièrement, la polymérisation est réalisée au sein d'un latex de polymère dopant. Un tel procédé se révèle particulièrement intéressant parce qu'il conduit à l'obtention de particules de polymères constituées par le polymère transformable dopant associé au polymère électro-conducteur. Selon le cas, les dispersions de ces particules peuvent être utilisées directement pour obtenir des articles électro-conducteurs par enduction et évaporation du milieu de dispersion ou bien les particules électro-conductrices composites peuvent être séparées du milieu de dispersion par les techniques usuelles et transformées en objets finis.

Quel que soit le procédé mis en oeuvre, on a constaté que les polymères électro-conducteurs obtenus perdent progressivement une partie de leur conductivité au cours du temps. Cette diminution est plus ou moins lente selon la nature du polymère électro-conducteur et selon son niveau de conductivité. On a observé en particulier, dans le cas du polypyrrole, que cette diminution de la conductivité est d'autant plus rapide que la conductivité du polymère électro-conducteur est plus élevée. La présente invention se propose précisément d'apporter une solution au problème de la stabilité dans le temps de la conductivité électrique des polymères électro-conducteurs obtenus par polymérisation d'un monomère hétérocyclique comportant deux doubles liaisons éthyléniques conjuguées en présence d'un polymère facile à mettre en oeuvre. Pour atteindre cet objectif et d'autres qui ressortiront de la description qui va suivre, il est proposé de faire appel à des compositions polymériques particulières.

Plus spécifiquement, la présente invention a pour premier objet des compositions de polymères utilisables pour l'obtention de polymères conducteurs aisément transformables. Un deuxième objet de l'invention réside dans des dispersions aqueuses ou hydro-organiques partielles de compositions de polymères utilisables pour l'obtention de compositions polymères électro-conductrices aisément transformables ; un troisième objet de l'invention réside dans un procédé d'obtention de compositions de polymères utilisables pour l'obtention de compositions polymères conductrices ; l'invention a pour quatrième objet des compositions polymères conductrices ; un cinquième objet de l'invention réside dans les dispersions aqueuses ou hydro-organiques desdites compositions polymères conductrices ; à titre de sixième objet, la présente invention concerne l'utilisation des compositions polymères électro-conductrices pour l'obtention de revêtements conducteurs.

Plus spécifiquement encore, la présente invention a pour premier objet des compositions polymériques caractérisées en ce qu'elles sont constituées par au moins un polymère thermoplastique et au moins un composé amphiphile (B) de formule générale : 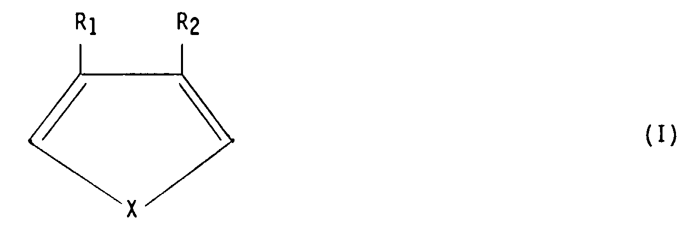 dans laquelle :
- R₁ et R₂, identiques ou différents, représentent des radicaux alkyles, linéaires ou ramifiés, aryle, alkylaryle, arylalkyle, hydroxycarbonyle, alkoxycarbonyle, amide ;
- X représente un atome d'oxygène, de soufre ou le radical divalent 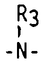 dans lequel R₃ représente un atome d'hydrogène, un radical alkyle, aryle, alkylaryle, arylalkyle ;
l'un au moins des substituants R₁, R₂ et R₃ comportant une chaîne hydrocarbonée linéaire et/ou cyclique ayant au moins 10 atomes de carbone.

Plus spécifiquement, R₁ et R₂ représentent des radicaux alkyles comportant de 1 à 30 atomes de carbone tels que les radicaux méthyle, éthyle, propyle, pentyle, hexyle, éthyle-2 hexyle, octyle, dodécyle, hexadécyle, octadécyle ; des radicaux aryle tels que le radical phényle ; des radicaux alkylaryle ou arylalkyle dans lesquels la partie alkyle comporte de 1 à 30 atomes de carbone tels que les radicaux méthyl-, éthyl-, octadécylphényle, benzyle, phényl-2 éthyle, phényldécyle ; des radicaux alkoxycarbonyle dans lesquels la partie alkoxy comporte de 1 à 30 atomes de carbone tels que les radicaux méthoxycarbonyle, éthoxycarbonyle, propoxycarbonyle, décyloxycarbonyle, dodécyloxycarbonyle, hexadécyloxycarbonyle, octadécyloxycarbonyle ; des groupes alkylamido dans lesquels la partie alkyle comporte de 1 à 30 atomes de carbone tels que les groupes méthylamido, éthylamido, propylamido, éthyl-2 hexylamido, stéarylamido, octadécylamido, diéthylamido, N-méthyl, N-hexylamido, N-éthyl, N-octylamido, N-méthyl N-hexadécylamido, N-éthyl, N-octadécylamido ; R₃ représente un radical alkyle comportant de 1 à 30 atomes de carbone tel que ceux cités ci-avant pour R₁ et R₂, des radicaux alkylaryle, arylalkyle et aryle tels que ceux cités pour R₁ et R₂.

Les radicaux R₁, R₂ et R₃ susceptibles de conférer un caractère amphiphile à la molécule de composé hétérocyclique de formule (I) sont des radicaux comportant une chaîne hydrocarbonée linéaire et/ou cyclique ayant au moins 10 atomes de carbone et de préférence de 14 à 30 atomes de carbone.

Comme exemple de composés amphiphile de formule (I), on peut citer le N-octadécylpyrrole, le N-dodécylpyrrole, le N-hexadécylpyrrole, le N-octadécyl, diméthyl-3,4 pyrrole, le N-octadécyl méthyl-3 hydroxycarbonyl-4 pyrrole, l'octadécyloxycarbonyl-3 méthyl-4 pyrrole, l'octadécyloxycarbonyl-3 pyrrole, l'hexadécyl-3 méthyl-4 pyrrole, l'octadécyl-3 thiophène, l'hexadécyl-3 thiophène, l'octadécyl-3 méthyl-4 thiophène, l'octadécyloxycarbonyl-3 thiophène, le dodécyl-3 furanne, l'hexadécyl-3 furanne.

Parmi les composés précités, on fait appel, de préférence, aux dérivés de substitution amphiphiles du pyrrole.

A titre de thermoplaste constituant les particules transformables utilisables comme constituant (A) des compositions selon l'invention, on peut faire appel à tout polymère aisément transformable en produits finis tels que des fibres, des films, des objets moulés ou des revêtements par les techniques usuelles de transformation des polymères telles que l'extrusion, l'extrusion-soufflage, le calandrage, le moulage, l'enduction, etc... . A ce titre, on peut faire appel à de nombreux polymères tels que les polymères et copolymères des a-oléfines (polyéthylène, polypropylène, copolymères éthylène-propylène) ; les polymères et copolymères des dioléfines conjuguées (polybutadiène, polyisoprène, copolymères butadiène-isoprène) ; les polymères et copolymères du styrène et de l'α-méthylstyrène avec d'autres monomères mono- ou polyéthylénique tels que le polystyrène, les copolymères styrène-butadiène, styrène-acrylonitrile, les copolymères styrène-butadiène-acrylonitrile, les copolymères styrène-butadiène-acide maléïque ; les polymères et copolymères des esters vinyliques : acétate de vinyle, proprionate de vinyle tels que le polyacétate de vinyle, les copolymères éthylène-acétate de vinyle et leurs dérivés d'hydrolyse (copolymères éthylène-alcool vinylique, copolymère éthylène-acétate de vinyle-alcool vinylique) ; les copolymères acryliques : polyacrylonitrile, polyacrylates et polyméthacrylates d'alkyle, polyacrylamides, polyméthacrylamides, poly(N-méthylolacrylamide, poly(N-méthoxyméthacrylamide) ; des polymères et copolymères d'acides ou d'anhydrides dicarboxyliques et éthyléniques ou leurs esters tels que les acides fumarique, maléïque ou itaconique ; des polymères et copolymères des halogénures éthyléniques tels que le polychlorure de vinyle, le polychlorure de vinylidène, le polyfluorure de vinylidène, etc... . On fait appel, de préférence, à des polymères thermoplastiques aisément dispersables dans l'eau sous forme de dispersions aqueuses stables ou latex. Plus préférentiellement encore, on fait appel à des polymères thermoplastiques tels que ceux cités ci-avant comportant dans leurs chaînes des motifs portant des groupes anioniques pouvant jouer le rôle d'un dopant lors de la polymérisation de monomères générant des polymères conducteurs. On utilise alors plus particulièrement : les polymères dérivés de monomères éthyléniques à groupes acides carboxylique (acides (méth)acryliques, acide maléïque, acide itaconique) ou leurs sels de métaux alcalins, alcalino-terreux ou d'ammonium ; les polymères dérivés de monomères éthyléniques à groupes sulfoniques ou sulfonates de métaux alcalins, alcalino-terreux ou d'ammonium, tels que les vinylsulfonates, les méthallylsulfonates, les vinylbenzènesulfonates, les sels de l'acide acrylamido-2 méthyl-2 propanesulfonique, de l'acrylate de sulfo-2 éthyle ; les polymères dérivés de monomères éthyléniques à groupes phosphonates tels que les bis(chloro-2 éthyl)vinylphosphonates.

Comme polymères à groupes anioniques convenant tout particulièrement bien à la préparation des compositions de polymères selon l'invention, on peut encore faire appel à des copolyesters comportant une pluralité de motifs dérivés de diols et/ou de diacides portant un ou plusieurs groupes sulfoniques ou sulfonates. De tels copolyesters ont été décrits notamment dans les brevets français publiés sous les n° 1.401.581 et 1.602.002, et dans le brevet européen n° 0.129.674. On peut encore faire appel à des copolymères greffés obtenus par polymérisation radicalaire en phase aqueuse d'un ou plusieurs monomère(s) acrylique(s) éventuellement associé(s) à un ou plusieurs monomère(s) vinylique, en présence d'un copolyester comportant une pluralité de motifs dérivés de diols et/ou de diacides portant un ou plusieurs groupes sulfoniques ou sulfonates tels que ceux décrits dans les brevets ou demandes de brevet précités. De tels copolymères greffés ont été décrits dans la demande de brevet européen publiée sous le n° 0.260.203.

Les compositions de polymères selon l'invention peuvent être préparées par tout procédé permettant d'incorporer le composé amphiphile (B) au polymère (A). Un procédé qui convient tout particulièrement bien à l'obtention de ces compositions consiste à ajouter le composé amphiphile (B) à une dispersion aqueuse ou hydro-organique de particules du polymère thermoplaste (A). De cette façon, on obtient des particules de polymère (A) comportant, implantées à leur surface, des molécules du composé amphiphile (B). Dans ces particules, les chaînes hydrophobes du composé (B) sont emmêlées de façon intime avec les chaînes du polymère (A) et la partie hydrophile et polymérisable du composé (B) est disposée à la surface desdites particules.

Par conséquent, les polymères thermoplastes (A) cités ci-avant sont mis en oeuvre, de préférence, sous forme de dispersions stables, ou latex, dans l'eau ou un milieu hydro-organique. Lorsque le polymère ne comporte pas de groupe hydrophile permettant d'obtenir aisément un latex, on peut lui associer un ou plusieurs agents tensio-actifs ioniques ou non ioniques tels que ceux utilisés habituellement pour l'obtention de dispersions aqueuses et bien connus de l'homme de métier. Pour l'obtention des particules selon l'invention, la teneur en polymère des latex n'est pas critique et peut varier dans de larges limites. En général, des latex contenant de 1 à 50 % en poids de polymère conviennent bien ; de préférence, on fait appel à des latex contenant de 5 à 30 % en poids de polymère. La dimension des particules du polymère constituant le latex est choisie en fonction de l'application à laquelle est destinée le latex final ; en général, on fait appel à des latex dont le diamètre des particules de polymère est compris entre environ 0,01 et 15 µm et, de préférence, entre 0,05 et 5 µm.

Les particules de polymères modifiées par les composés amphiphiles de formule (I) peuvent être obtenues par addition sous agitation d'une solution du composé amphiphile (B) dans un solvant organique à une dispersion aqueuse ou hydro-organique du polymère-support (A). La nature du solvant n'est pas critique et dépend essentiellement de la nature du composé amphiphile, de celle du polymère- support et du milieu le contenant. On utilise, de préférence, des solutions du composé amphiphile dans un solvant organique miscible à l'eau. Ainsi, lorsque le composé amphiphile est un dérivé du pyrrole, on peut faire appel à une cétone à faible condensation en carbone telle que l'acétone et la méthyléthylcétone.

Lorsque l'addition est terminée, le solvant du composé amphiphile est éliminé par évaporation. Pour assurer un mélange homogène du composé amphiphile avec le polymère-support, on peut procéder à un chauffage du mélange à une température qui dépend de la nature du polymère. En général, il se révèle avantageux de conduire l'addition du composé amphiphile au voisinage de la température de transition vitreuse du polymère (A). Lorsque le solvant du composé amphiphile exerce une action de gonflement du polymère-support, un tel chauffage peut s'avérer inutile.

Les quantités respectives de polymère (A) et de composé amphiphile (B) présents dans les compositions selon l'invention peuvent varier dans de larges limites, telles que la quantité de composé (B) représente de 0,1 à 20 % en poids du polymère (A) et, de préférence, de 0,2 à 5 %.

Les compositions de polymère-support (A) et du composé amphiphile (B) peuvent être séparées du latex par les méthodes connues, par exemple par centrifugation.

Les compositions de polymère (A) et de composé amphiphile (B), conviennent tout particulièrement bien pour l'obtention de polymères conducteurs faciles à mettre en oeuvre sous forme d'objets variés tels que des films, des fils, des revêtements, des objets moulés. La présente invention a donc encore pour objet de tels polymères conducteurs et leurs procédés d'obtention.

Plus spécifiquement, la présente invention a pour objet des compositions polymères électro-conductrices transformables constituées par au moins un polymère thermoplaste (A) et un polymère électro-conducteur (C) dérivé d'un monomère de formule générale : 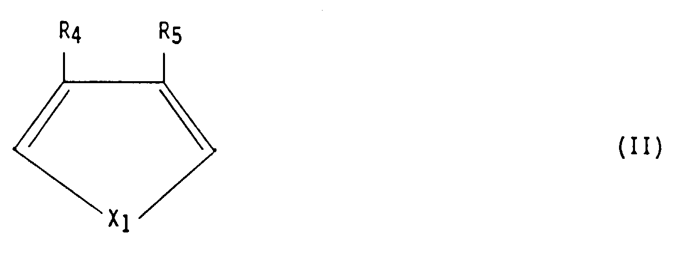 dans laquelle :
- R₄ et R₅, identiques ou différents, représentent un atome d'hydrogène ou des radicaux ne conférant aucun caractère amphiphile au composé (C) ;
- X₁ représente un atome d'oxygène, un atome de soufre ou le radical divalent 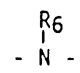 dans lequel R₆ représente un atome d'hydrogène ou un radical identique ou différent de R₄ et R₅ et non susceptible de conférer un caractère amphiphile au composé (C),
caractérisées en ce que ledit polymère électo-conducteur présente des motifs dérivés d'au moins un composé amphiphile (B) de formule générale (I).

Plus spécifiquement, dans la formule (II), R₄ et R₅ représentent : un atome d'hydrogène ou des radicaux alkyles ayant de 1 à 4 atomes de carbone ; des radicaux alkoxycarbonyle ayant de 1 à 4 atomes de carbone dans la partie alkoxy ; des radicaux hydroxycarbonyle ; des radicaux phényles ; des radicaux alkylaryle ou arylalkyle dans lesquels la partie alkyle comporte de 1 à 2 atomes de carbone. R₆ représente plus précisément un atome d'hydrogène ou un radical alkyle comportant de 1 à 4 atomes de carbone, un radical phényle, un radical alkylphényle ou phénylalkyle dans lequel la partie alkyle comporte de 1 à 2 atomes de carbone.

Comme exemples de radicaux R₄ et R₅, on peut citer les radicaux méthyle, éthyle, propyle, toluyle, xylyle, benzyle, phényl-2 éthyle, méthoxycarbonyle, éthoxycarbonyle. R₆ peut représenter un radical méthyle, éthyle, isopropyle, toluyle, xylyle, benzyle.

Comme exemples spécifiques de composés de formule (II), on peut citer : le pyrrole, le méthyl-3 pyrrole, l'éthyl-3 pyrrole, le diméthyl-3,4 pyrrole, le phényl-3 pyrrole, le méthoxycarbonyl-3 méthyl-4 pyrrole, le N-méthylpyrrole, le thiophène, le méthyl-3 thiophène, l'éthyl-3 thiophène, le méthyl-3 furanne, le méthoxycarbonyl-3 furanne, l'éthoxycarbonyl-3 furanne.

Les compositions polymères électro-conductrices selon la présente invention peuvent être obtenues par polymérisation d'au moins un monomère (C) de formule (II) en présence de la composition polymère constituée par le polymère thermoplaste (A) et le composé amphiphile (B), selon les procédés connus de polymérisation des monomères (C). A ce titre, on peut procéder à une polymérisation anodique en phase aqueuse, la composition constituée par le polymère thermoplaste (A) et le composé amphiphile (B) étant alors dispersée dans la phase aqueuse d'électrolyse. Lorsque le polymère thermoplaste (A) ne peut jouer le rôle de dopant, on conduit la polymérisation anodique en présence d'un électrolyte dont l'anion est apte à stabiliser le polymère formé sous sa forme conductrice ; à ce titre, on peut faire appel à des électrolytes tels que ceux cités dans Encyclopedia of Polymer Science, Vol. 13, pages 45 à 48 (par exemple à du tétrafluoroborate de sodium, à du sulfate acide de sodium, à du perchlorate de sodium). Lorsqu'on fait appel à des compositions dans lesquelles le polymère thermoplaste (A) peut jouer le rôle de dopant en raison de son caractère anionique, il n'est pas nécessaire de faire appel à d'autres agents dopants. Dans tous les cas, les conditions de polymérisation anodique sont celles utilisées habituellement (conférer notamment la demande européenne n° 0.160.207).

Les polymères conducteurs de l'invention peuvent encore être préparés de façon connue par polymérisation chimique oxydante d'un ou plusieurs monomères (C) en présence de la composition polymère comportant le polymère (A) et le composé amphiphile (B), sous l'influence des oxydants usuels. A ce titre, on peut citer : des composés péroxygénés minéraux tels que les sels alcalins et d'ammonium de peroxyacides (perborates, percarbonates, perchromates, persulfates alcalins), l'acide perchlorique, l'eau oxygénée ; des acides de Lewis tels que les sels des métaux de transition et notamment des halogénures ou des sulfates ; ainsi, on peut faire appel aux chlorure ou sulfate ferrique, aux chlorure ou sulfate de titane, au chlorure cuivrique, etc... . Lorsque le polymère (A) ne comporte pas de groupes ioniques susceptibles d'équilibrer la charge électrique du polymère conducteur et lorsque l'anion du composé oxydant ne peut jouer le rôle de dopant, on conduit l'oxydation en présence d'un agent tensio-actif anionique susceptible de remplir ce rôle : on peut, par exemple, faire appel à des sulfonates ou à des sulfates alcalins ou d'ammonium (par exemple le dodécylbenzène sulfonate de sodium, le sulfate de lauryle et de sodium, le sulfosuccinate de dioctyle et de sodium).

Selon une première variante, la polymérisation chimique du (ou des) monomère(s) (C) peut être réalisée au sein d'une dispersion (ou latex) de particules de la composition de polymère (A) et de composé amphiphile (B) dans un milieu liquide selon les procédés décrits dans la demande de brevet européen n° 0.229.992 et dans la demande de brevet français n° 2.615.790. Le milieu liquide de dispersion de la composition comportant le polymère thermoplaste (A) et le composé amphiphile (B) peut être l'eau ou un milieu hydro-organique. De préférence, le milieu liquide de dispersion est choisi de façon à ce qu'il soit solvant du monomère (C). Ainsi, si le monomère (C) est soluble dans l'eau, le milieu de dispersion de la composition (A)/(B) est de préférence l'eau. Le polymère conducteur selon l'invention peut être obtenu de façon simple par addition sous agitation du (ou des) monomère(s) (C) en solution dans le liquide de dispersion de la composition polymère (A)/(B) ou dans un solvant miscible avec ce liquide puis addition du composé oxydant. La température à laquelle est réalisée la polymérisation est en général comprise entre 0°C et 30°C, de préférence entre 5 et 25°C. Les quantités relatives des différents réactifs mis en oeuvre (essentiellement composition polymère (A)/(B), oxydant et monomère(s) (C)) sont fonction de la quantité de polymère électro-conducteur dérivé de (C) que l'on désire introduire dans le polymère final, c'est-à-dire de l'électro-conductivité désirée pour ledit polymère. D'une façon générale, la quantité du (ou des) monomère(s) (C) peut représenter de 1 à 50 % en poids du polymère thermoplaste (A). Le rapport molaire oxydant/monomère (C) est, de préférence, voisin de la quantité stoechiométrique bien que l'on puisse s'en écarter sensiblement ; ainsi, on pourrait utiliser de 0,9 à 2,5 fois la quantité stoechiométrique d'oxydant. La dispersion de polymère conducteur obtenu en fin de polymérisation peut être utilisée telle quelle ou bien les particules de polymère conducteur peuvent être séparées du milieu de dispersion par les techniques usuelles (par exemple centrifugation et filtration).

Selon une deuxième variante du pocédé selon l'invention, la composition polymère conductrice peut être obtenue par imprégnation de la composition polymère (A)/(B) au moyen d'un oxydant, puis mise en contact de la composition imprégnée avec au moins un monomère (C). Dans un tel procédé, la composition (A)/(B) se présente, de préférence, sous forme d'un objet conformé, par exemple un film ou une fibre. Selon une autre variante, la composition polymère (A)/(B) est mise en contact, d'abord, avec le monomère (C) puis avec l'oxydant. On peut, par exemple, mettre en contact un film de composition (A)/(B) avec des vapeurs de monomère (C), puis plonger le film imprégné de monomère (C) dans une solution d'oxydant dans un solvant adéquat maintenue à température convenable. En règle générale, la polymérisation est conduite à une température comprise entre 0 à 30°C et, de préférence, entre 10 et 25°C. La concentration de la solution de composé oxydant peut varier dans de larges limites ; ainsi, une solution contenant de 0,1 à 20 % en poids d'oxydant et, de préférence, de 0,5 à 10 % en poids convient bien. La température à laquelle la composition polymères (A)/(B) est mise en contact avec les vapeurs de monomère (C) peut être comprise entre 5 et 70°C et, de préférence, entre 15 et 35°C. La durée du contact entre la composition (A)/(B) et le monomère (C) dépend de la quantité de polymère conducteur que l'on désire déposer sur la composition (A)/(B). En général, des durées de contact comprises ente 1 et 60 mn conviennent bien. En opérant selon cette variante, on obtient directement des objets conformés revêtus d'une pellicule de polymère électro-conducteur, par exemple de polypyrrole. En particulier, on peut obtenir directement des films de polymère (A) revêtus en surface par une couche de polymère conducteur qui leur confère des propriétés antistatiques.

Lorsque la polymérisation du (ou des) monomère(s) (C) est conduite au sein d'une dispersion de la composition polymère (A)/(B), on obtient une dispersion de particules de composition (A)/(B) enrobées de polymère électro-conducteur dérivé du (ou des) monomère(s) (C). De telles dispersions, et notamment les dispersions aqueuses, peuvent être utilisées pour l'obtention de films thermoplastiques portant un revêtement de polymère électro-conducteur sur au moins une de leurs faces. Comme films thermoplastiques, on peut citer des films en polyéthylène, en polypropylène, en polyamides (polyamides-66 par exemple), en polychlorure de vinyle, en polychlorure de vinylidène, en dérivés de la cellulose, en polyester et notamment en polytéréphtalate d'alkylèneglycols. La dispersion de polymère conducteur peut alors être déposée sur les films thermoplastiques par les méthodes connues d'enduction. Dans le cas où le film est obtenu par étirage ou multiétirage d'un film extrudé amorphe, l'enduction peut être réalisée avant tout étirage ou, le cas échéant, entre deux étirages successifs (enduction en ligne) ou après obtention du film étiré (enduction en reprise). Préalablement à l'enduction par le polymère électro-conducteur, le film thermoplastique peut subir un traitement destiné à en améliorer l'adhésion au revêtement électro-conducteur (par exemple traitement corona) ou peut recevoir un revêtement primaire d'adhésion de type connu. Les films thermoplastiques portant un revêtement de polymère électro-conducteur selon l'invention constituent un dernier objet de la présente demande.

### EXEMPLE 1

### 1. Préparation d'un latex de particules de copolymère styrènebutadiène comportant des molécules d'octadécyloxycarbonyl-3 méthyl-4 pyrrole à leur surface.

Dans un ballon de 500 ml équipé d'un système d'agitation, d'un dispositif de chauffage et d'une colonne de distillation sous vide, on charge :
- 100 g d'un latex aqueux de particules de copolymères styrène/butadiène/ acide maléique à 50 % en poids d'extrait sec ; le copolymère a une température de transition vitreuse de 0°C et les particules ont un diamètre moyen de 0,14 µm. Ce latex est vendu sous la dénomination commerciale SB 023® par la Société RHONE-POULENC ;
- 100 g d'eau distillée de façon à obtenir un latex à 25 % en poids d'extrait sec.

Le contenu du ballon est porté à 35°C, puis on ajoute lentement (en 10 mn), sous agitation, une solution de 400 mg d'octadécyloxycarbonyl-3 méthyl-4 pyrrole dans 50 g d'acétone pure. Lorsque l'addition est terminée, le contenu du ballon est maintenu encore 1 heure sous agitation à 35°C. On évapore ensuite l'acétone, puis on concentre le latex jusqu'à une teneur en extrait de 40 % en poids par distillation de l'eau sous pression réduite sans dépasser 40°C.

Un échantillon du latex est filtré sur une toile de nylon de maille égale à 5 µm. Le résidu obtenu est soumis à une analyse par spectrométrie infrarouge.

On a obtenu de cette façon un latex de particules styrène-butadiène comportant, implantée à leur surface, 0,8 % en poids d'octadécyloxycarbonyl-3 méthyl-4 pyrrole par rapport à l'extrait sec.

### 2. Obtention d'un polymère conducteur

Sur un film de polychlorure de vinyle (PVC) de 5 mm d'épaisseur, de 10 cm de largeur et de 20 cm de longueur, on coule un film du latex modifié décrit précédemment à l'aide d'un tire-film réglé pour obtenir une épaisseur de 0,8 mm. Le film et le support PVC sont placés dans une étuve pendant 24 heures pour évaporer l'eau. Lorsque le séchage est terminé, on sépare le film de copolymère styrène-butadiène du support PVC.

Un échantillon de 2 g de film de copolymère-styrène-butadiène modifié est mis en contact pendant 30 mn avec des vapeurs de pyrrole maintenues à 20°C dans un cristallisoir. Le film imprégné de pyrrole est ensuite plongé dans une solution aqueuse à 1 % en poids de persulfate d'ammonium maintenue à 20°C, pendant 3 mn. Le film composite ainsi obtenu est rincé à l'eau permutée et séché à 20°C pendant 24 heures.

La conductivité de surface du film est déterminée au moyen d'un électromètre de marque commerciale KEITHLEY 617® et d'une cellule de KEITHLEY 6105® comprenant 3 électrodes. Le film composite obtenu présente une conductivité de surface de 3,6 x 10⁻⁸ S.

A titre comparatif, on a préparé un film électro-conducteur en suivant le mode opératoire décrit ci-avant, mais après avoir remplacé le copolymère styrène/butadiène modifié par l'octadécyloxycarbonyl-3 méthyl-4 pyrrole par le copolymère styrène-butadiène non modifié. Dans ces conditions, on a obtenu un film présentant une conductivité de surface de 1,65 x 10⁻¹³ S.

### EXEMPLES 2 à 5

On a préparé une série de films électro-conducteurs à partir, d'une part de films de copolymère styrène-butadiène non modifié et d'autre part de films de copolymère styrène-butadiène modifié, par le procédé décrit à l'exemple 1 conduit dans les mêmes conditions à l'exception de la température d'imprégnation des films par les vapeurs de pyrrole qui a été portée à 30°C et de la durée de l'imprégnation. Après séchage, on a obtenu des films présentant les conductivités de surface consignées dans le tableau suivant :

| EXEMPLES | Durée d'imprégnation mn | Conductivité en S | |
|---|---|---|---|
| | | Polymère modifié | Polymère non modifié |
| 2 | 5 | 5,5.10⁻⁸ | 1,5.10⁻¹¹ |
| 3 | 10 | 3,7.10⁻⁷ | 1,7.10⁻⁸ |
| 4 | 15 | 4,7.10⁻⁷ | 4,1.10⁻⁹ |
| 5 | 25 | 5,5.10⁻⁵ | 3,89.10⁻⁷ |

On constate que la conductivité du film de copolymère styrène-butadiène modifié par le pyrrole amphiphile augmente plus rapidement que celle du film de copolymère styrène-butadiène non modifié.

### EXEMPLE 6

En opérant comme à l'exemple 1, on a préparé un film électro-conducteur qui présente une conductivité de surface de 3,6.10⁻⁸ S. On a contrôlé l'évolution de la conductivité de ce film dans le temps en mesurant sa conductivité après 1 jour, 2 jours, 8 et 16 jours de stockage à 25°C dans une enceinte dont l'atmosphère a une humidité relative (HR) de 40 %. On a obtenu les résultats consignés dans le tableau suivant :

| Durée de stockage en jours | Conductivité en S |
|---|---|
| 1 | 3,6.10⁻⁸ |
| 2 | 4,7.10⁻⁹ |
| 6 | 4,4.10⁻⁹ |
| 8 | 1,6.10⁻⁹ |
| 16 | 1,5.10⁻⁹ |

On constate qu'à partir du deuxième jour la conductivité évolue lentement.

A titre comparatif, on a préparé, dans les mêmes conditions, un film électro-conducteur mais à partir d'un copolymère styrène-butadiène non modifié par l'octadécyloxycarbonyl-3 méthyl-4 pyrrole. Ce film présente une conductivité de surface de 7.10⁻¹⁰ S. On a contrôlé l'évolution de sa conductivité dans les mêmes conditions que précédemment. Les résultats obtenus figurent dans le tableau ci-après :

| Durée de stockage en jours | Conductivité en S |
|---|---|
| 1 | 7.10⁻¹⁰ |
| 2 | 2.10⁻¹⁰ |
| 6 | 1.10⁻¹¹ |
| 8 | 5.10⁻¹² |
| 16 | 2.10⁻¹² |

On constate que la conductivité de surface des films conducteurs obtenus à partir du copolymère styrène-butadiène non modifié décroît plus rapidement que celle des polymères conducteurs selon l'invention.

## Revendications

1. Compositions polymériques caractérisées en ce qu'elles sont constituées par au moins un polymère thermoplastique (A) et au moins un composé amphiphile (B) de formule générale : 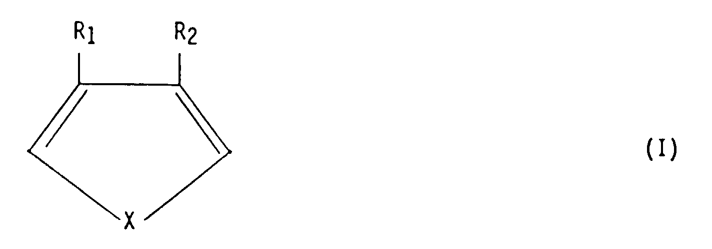 dans laquelle :
- R₁ et R₂, identiques ou différents, représentent des radicaux alkyles, linéaires ou ramifiés, aryle, alkylaryle, arylalkyle, hydroxycarbonyle, alkoxycarbonyle, amide ;
- X représente un atome d'oxygène, de soufre ou le radical divalent 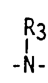 dans lequel R₃ représente un atome d'hydrogène, un radical alkyle, aryle, alkylaryle, arylalkyle ;
l'un au moins des substituants R₁, R₂ et R₃ comporte une chaîne hydrocarbonée linéaire et/ou cyclique ayant au moins 10 atomes de carbone pour conférer au composé de formule (I) un caractère amphiphile, le composé amphiphile (B) représentant de 0,1 à 20 % en poids du polymère (A).

2. Compositions selon la revendication 1, caractérisées en ce que le composé amphiphile (B) est un dérivé du pyrrole.

3. Compositions selon la revendication 2, caractérisées en ce que le composé amphiphile est l'octodécyloxycarbonyl-3 méthyl-4 pyrrole.

4. Compositions selon l'une quelconque des revendications 1 à 3, caractérisées en ce que le polymère thermoplastique est un copolymère styrène-butadiène-acide maléique.

5. Compositions selon l'une quelconque des revendications 1 à 4, caractérisées en ce qu'elles sont sous forme de particules de polymères (A) ayant, implantées à leur surface, des molécules de composé amphiphile (B).

6. Compositions selon la revendication 5, caractérisées en ce que les particules sont sous forme d'une dispersion stable dans l'eau ou dans un milieu hydro-organique.

7. Procédé d'obtention de compositions polymériques selon l'une quelconque des revendications 1 à 6, caractérisé en ce que l'on ajoute une solution d'un composé amphiphile (B) dans un solvant à une dispersion stable d'un polymère (A) dans l'eau ou un milieu hydro-organique, puis que l'on élimine, le cas échéant, le solvant.

8. Procédé selon la revendication 7, caractérisé en ce que le mélange constitué par la dispersion de polymère (A) et de composé amphiphile est porté à la température de transition vitreuse du polymère (A).

9. Compositions polymères électro-conductrices transformables constituées par au moins un polymère thermoplastique (A) et un polymère électro-conducteur dérivé d'un monomère (C) de formule générale : 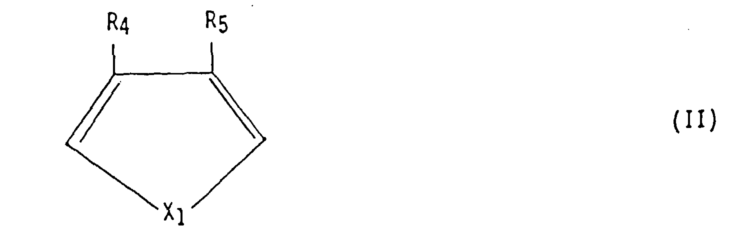 dans laquelle :
- R₄ et R₅, identiques ou différents, représentent un atome d'hydrogène ou des radicaux ne conférant aucun caractère amphiphile au composé (C) ;
- X₁ représente un atome d'oxygène, un atome de soufre ou le radical divalent 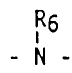 dans lequel R₆ représente un atome d'hydrogène ou un radical identique ou différent de R₄ et R₅ et non susceptible de conférer un caractère amphiphile au composé (C),
caractérisées en ce que ledit polymère électro-conducteur présente des motifs dérivés d'au moins un composé amphiphile (B) de formule générale (I).

10. Compositions électro-conductrices selon la revendication 9, caractérisées en ce que le polymère conducteur est un copolymère du pyrrole et de l'octadécyloxycarbonyl-3 méthyl-4 pyrrole.

11. Compositions électro-conductrices selon l'une quelconque des revendications 9 et 10, caractérisées en ce qu'elles comportent de 1 à 50 % en poids de motifs dérivés du monomère (C) rapporté au polymère thermoplastique (A).

12. Compositions polymères selon l'une quelconque des revendications 1 à 11, caractérisées en ce qu'elles se présentent sous forme d'un film.

13. Compositions polymères selon l'une quelconque des revendications 1 à 11, caractérisées en ce qu'elles sont sous forme de particules de polymères (A) enrobées d'un copolymère électro-conducteur dérivé du composé amphiphile (B) et du monomère (C).

14. Compositions polymères selon la revendication 13, caractérisées en ce que les particules sont sous forme d'une dispersion aqueuse ou hydro-organique stable.

15. Utilisation des compositions polymères électro-conductrices selon l'une quelconque des revendications 9 à 14 pour le revêtement d'objets thermoplastiques.

16. Films en polymères thermoplastiques comportant un revêtement d'une composition polymère électro-conductrice selon l'une quelconque des revendications 9 à 14.

17. Films en polyester comportant un revêtement d'une composition polymère électro-conductrice selon l'une quelconque des revendications 9 à 14.

## Patentansprüche

1. Polymerzusammensetzungen, dadurch gekennzeichnet, daß sie durch zumindest ein thermoplastisches Polymer (A) und zumindest eine amphiphile Verbindung (B) mit der allgemeinen Formel 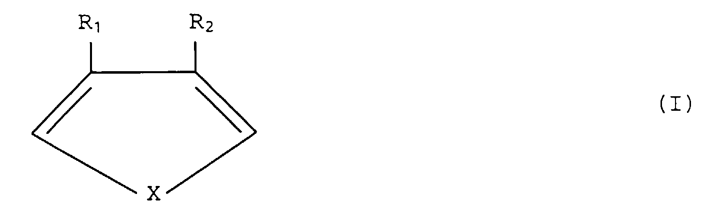 gebildet werden, in der
- R₁ und R₂, die identisch oder unterschiedlich sind, lineare oder verzweigte Alkylradikale, Aryl-, Alkylaryl-, Arylalkyl-, Hydroxycarbonyl-, Alkoxycarbonyl- oder Amidradikale darstellen;
- X ein Sauerstoffatom, ein Schwefelatom oder das zweiwertige Radikal 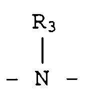 darstellt, wobei R₃ ein Wasserstoffatom, ein Alkyl-, Aryl-, Alkylaryl- oder Arylalkylradikal darstellt;
wobei zumindest einer der Substituenten R₁, R₂ und R₃ eine lineare und/oder zyklische Kohlenwasserstoffkette mit zumindest 10 Kohlenstoffatomen enthält, um der Verbindung mit der Formel (I) einen amphiphilen Charakter zu verleihen, wobei die amphiphile Verbindung (B) 0,1 bis 20 Gew.% des Polymers (A) darstellt.

2. Zusammensetzungen nach Anspruch 1, dadurch gekennzeichnet, daß die amphiphile Verbindung (B) ein Pyrrolderivat ist.

3. Zusammensetzungen nach Anspruch 2, dadurch gekennzeichnet, daß die amphiphile Verbindung Octadecyloxycarbonyl-3-methyl-4-pyrrol ist.

4. Zusammensetzungen nach einem der Ansprüche 1 bis 3, dadurch gekennzeichnet, daß das thermoplastische Polymer ein Styrol-Butadien-Maleinsäure-Copolymer ist.

5. Zusammensetzungen nach einem der Ansprüche 1 bis 4, dadurch gekennzeichnet, daß sie in der Form von Polymerpartikeln (A) vorliegen, die, in ihre Oberfläche eingepflanzt, Moleküle der amphiphilen Verbindung (B) aufweisen.

6. Zusammensetzungen nach Anspruch 5, dadurch gekennzeichnet, daß die Partikel in der Form einer stabilen Dispersion in Wasser oder in einem hydroorganischen Medium vorliegen.

7. Verfahren zur Herstellung von Polymerzusammensetzungen nach einem der Ansprüche 1 bis 6, dadurch gekennzeichnet, daß man eine Lösung einer amphiphilen Verbindung (B) in einem Lösungsmittel einer stabilen Dispersion eines Polymers (A) in Wasser oder in einem hydroorganischen Medium zusetzt, und daß man danach gegebenenfalls das Lösungsmittel entfernt.

8. Verfahren nach Anspruch 7, dadurch gekennzeichnet, daß die Mischung aus der Dispersion des Polymers (A) und der amphiphilen Verbindung auf die Glasübergangstemperatur des Polymers (A) gebracht wird.

9. Transformierbare, elektrisch leitfähige Polymerzusammensetzungen, gebildet aus zumindest einem thermoplastischen Polymer (A) und einem elektrisch leitfähigen Polymer, das von einem Monomer (C) mit der allgemeinen Formel: 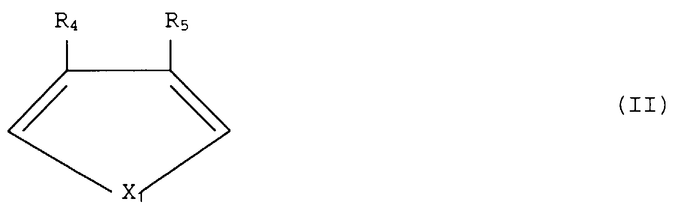 abgeleitet ist, in der:
- R₄ und R₅, die identisch oder unterschiedlich sind, ein Wasserstoffatom oder Radikale sind, die der Verbindung (C) keinerlei amphiphilen Charakter verleihen;
- X₁ ein Sauerstoffatom, ein Schwefelatom oder das zweiwertige Radikal 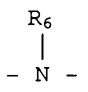 ist, wobei R₆ ein Wasserstoffatom oder ein Radikal ist, das identisch mit oder verschieden von R₄ und R₅ ist und nicht in der Lage ist, der Verbindung (C) einen amphiphilen Charakter zu verleihen,
dadurch gekennzeichnet, daß das genannte elektrisch leitfähige Polymer Elemente aufweist, die von zumindest einer amphiphilen Verbindung (B) mit der allgemeinen Formel (I) abgeleitet sind.

10. Elektrisch leitfähige Zusammensetzungen nach Anspruch 9, dadurch gekennzeichnet, daß das leitfähige Polymer ein Copolymer von Pyrrol und Octadecyloxycarbonyl-3-methyl-4-pyrrol ist.

11. Elektrisch leitfähige Zusammensetzungen nach einem der Ansprüche 9 und 10, dadurch gekennzeichnet, daß sie bezogen auf das thermoplastische Polymer (A) von 1 bis 50 Gew.% Einheiten enthalten, die vom Monomer (C) abgeleitet sind.

12. Polymerzusammensetzungen nach einem der Ansprüche 1 bis 11, dadurch gekennzeichnet, daß sie in der Form eines Films vorliegen.

13. Polymerzusammensetzungen nach einem der Ansprüche 1 bis 11, dadurch gekennzeichnet, daß sie in der Form von Polymerpartikeln (A) vorliegen, die mit einem elektrisch leitfähigen Copolymer überzogen sind, das von der amphiphilen Verbindung (B) und dem Monomer (C) abgeleitet ist.

14. Polymerzusammensetzungen nach Anspruch 13, dadurch gekennzeichnet, daß die Partikel in der Form einer stabilen wäßrigen oder hydroorganischen Dispersion vorliegen.

15. Verwendung der elektrisch leitfähigen Polymerzusammensetzungen nach einem der Ansprüche 9 bis 14 für die Beschichtung von thermoplastischen Gegenständen.

16. Filme aus thermoplastischen Polymeren, die eine Beschichtung mit einer elektrisch leitfähigen Polymerzusammensetzung nach einem der Ansprüche 9 bis 14 aufweisen.

17. Filme aus Polyester, die eine Beschichtung mit einer elektrisch leitfähigen Polymerzusammensetzung nach einem der Ansprüche 9 bis 14 aufweisen.

## Claims

1. Polymeric compositions characterised in that they consist of at least one thermoplastic polymer (A) and at least one amphiphilic compound (B) of the general formula : 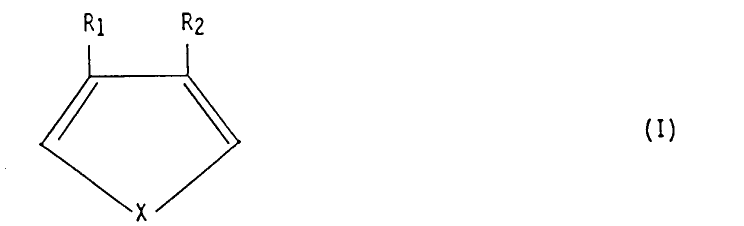 in which
- R₁ and R₂, which are identical or different, denote linear or branched alkyl, aryl, alkylaryl, arylalkyl, hydroxycarbonyl, alkoxycarbonyl or amide radicals;
- X denotes an oxygen or sulphur atom or the divalent radical 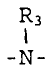 in which R₃ denotes a hydrogen atom or an alkyl, aryl, alkylaryl, arylalkyl radical; at least one of the substituents R₁, R₂ and R₃ comprises a linear and/or cyclic hydrocarbon chain having at least 10 carbon atoms to impart an amphiphilic character to the compound of formula (I), said amphiphilic compound (B) representing from 0.1 % to 20 % by weight of the polymer (A).

2. Compositions according to Claim 1, characterised in that the amphiphilic compound (B) is a pyrrole derivative.

3. Compositions according to Claim 2, characterised in that the amphiphilic compound (B) is 3-octadecyloxycarbonyl-4-methylpyrrole.

4. Compositions according to any one of Claims 1 to 3, characterised in that the thermoplastic polymer is a styrenebutadiene-maleic acid copolymer.

5. Compositions according to any one of Claims 1 to 4, characterised in that they are in the form of polymer particles (A) which have, implanted at their surface, molecules of amphiphilic compound (B).

6. Compositions according to Claim 5, characterised in that the particles are in the form of a stable dispersion in water or in a hydroorganic medium.

7. Process for obtaining polymeric compositions according to any one of Claims 1 to 6, characterised in that a solution of an amphiphilic compound (B) in a solvent is added to a stable dispersion of a polymer (A) in water or a hydroorganic medium, and in that the solvent is then removed if appropriate.

8. Process according to Claim 7, characterised in that the mixture consisting of the dispersion of polymer (A) and of amphiphilic compound is brought to the glass transition temperature of the polymer (A).

9. Convertible electroconductive polymer compositions consisting of at least one thermoplastic polymer (A) and an electroconductive polymer derived from a monomer (C) of the general formula : 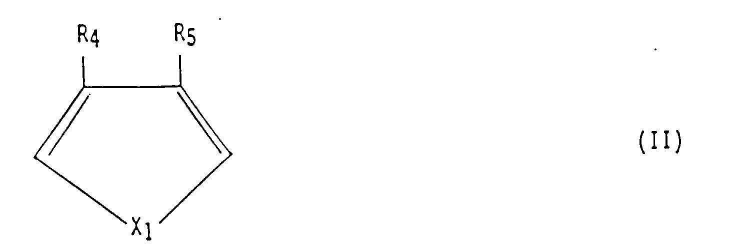 in which
- R₄ and R₅, which are identical or different, denote a hydrogen atom or radicals which do not impart any amphiphilic character to the compound (C);
- X₁ denotes an oxygen or sulphur atom or the divalent radical 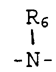 in which R₆ denotes a hydrogen atom or a radical which is identical with or different from R₄ and R₅ and incapable of imparting an amphiphilic character to the compound (C),
characterised in that the said electroconductive polymer contains structural units derived from at least one amphiphilic compound (B) of the general formula (I).

10. Electroconductive compositions according to Claim 9, characterised in that the conductive polymer is a copolymer of pyrrole and of 3-octadécyloxycarbonyl-4-méthylpyrrole.

11. Electroconductive compositions according to either of Claims 9 or 10, characterised in that they comprise from 1 to 50 % by weight of structural units derived from the monomer (C) related to the thermoplastic polymer (A).

12. Polymer compositions according to any one of Claims 1 to 11, characterised in that they are in the form of a film.

13. Polymer compositions according to any one of Claims 1 to 11, characterised in that they are in the form of particles of polymer (A) coated with an electroconductive copolymer derived from the amphiphilic compound (B) and from the monomer (C).

14. Polymer compositions according to Claim 13, characterised in that the particles are in the form of a stable aqueous or hydroorganic dispersion.

15. Use of the electroconductive polymer compositions according to any one of Claims 9 to 14 for coating thermoplastic objects.

16. Films made of thermoplastic polymers comprising a coating of an electroconductive polymer composition according to any one of Claims 9 to 14.

17. Polyester films comprising a coating of an electroconductive polymer composition according to any one of Claims 9 to 14.
